# EUROPÄISCHE PATENTSCHRIFT

(11) **EP 1 243 803 B1**
(45) Veröffentlichungstag und Bekanntmachung des Hinweises auf die Patenterteilung: **07.01.2009**
(21) Anmeldenummer: 02004826.0
(22) Anmeldetag: 02.03.2002
(51) Int. Cl.: F16D 1/08, B23Q 3/12

(54) **Verbindungsstelle zwischen zwei Werkzeugteilen**
Joint between two tool parts
Joint entre deux pièces d'outil

(30) Priorität: 22.03.2001 DE 10114746
(43) Veröffentlichungstag der Anmeldung: 25.09.2002
(73) Patentinhaber: MAPAL Fabrik für Präzisionswerkzeuge Dr. Kress KG, D-73431 Aalen (DE)
(72) Erfinder:
(74) Vertreter: Gleiss, Alf-Olav

(56) Entgegenhaltungen:
- EP-A- 0 753 680
- DE-A- 2 856 720
- PATENT ABSTRACTS OF JAPAN vol. 2000, no. 23, 10. Februar 2001 (2001-02-10) & JP 2001 150269 A (BIG ALPHA KK), 5. Juni 2001 (2001-06-05)

## Beschreibung

Die Erfindung betrifft ein Werkzeug mit einer Verbindungsstelle zwischen zwei Werkzeugteilen gemäß Oberbegriff des Anspruchs 1 (siehe z.B., EP-0 753 680-A).

Verbindungsstellen der hier angesprochenen Art sind bekannt. Sie treten im Bereich zweier miteinander verbundener Werkzeugteile auf. Denkbar ist es, dass beispielsweise ein Werkzeug an einer Halterung befestigt wird, die Teil einer Werkzeugmaschine ist oder an dieser angebracht wird. Möglich ist es auch, dass eine Verbindungsstelle der hier angesprochenen Art zwischen einem Werkzeug und einem Zwischenstück, einem Werkzeug und einem Adapter oder zwischen Zwischenstücken und Adaptern gegeben sind. Wesentlich ist, dass im Bereich der Verbindungsstelle zwischen zwei Werkzeugteilen eine definierte Winkellage gegeben ist, so dass bei einem Werkzeugtausch bei der Bearbeitung eines Werkstücks nicht unterschiedliche Maße gegeben sind. Beispielsweise kann ein Werkzeug zur spanabtragenden Bearbeitung, wie zum Beispiel ein Drehwerkzeug oder eine Reibahle, bei Verschleiß der Messerplatte ausgetauscht werden, ohne dass es bei der Weiterbearbeitung des Werkstücks zu Änderungen der Maße der bearbeiteten Bohrungen kommt.

Zur Einstellung der gewünschten Winkellage werden Vorrichtungen im Bereich von Verbindungsstellen eingesetzt, die eine definierte Positionierung der beiden in der Verbindungsstelle zusammengesetzten Werkzeugteile ermöglicht. Bislang eingesetzte elastische Elemente haben jedoch in einigen Fällen keine ausreichenden Einstellkräfte ergeben, so dass die Positionierung der beiden Werkzeugteile im Bereich der Verbindungsstelle nicht immer optimal war.

Aufgabe der Erfindung ist es daher, eine Verbindungsstelle der eingangs genannten Art zu schaffen, die diesen Nachteil vermeidet.

Zur Lösung dieser Aufgabe wird eine Verbindungsstelle vorgeschlagen, die die in Anspruch 1 genannten Merkmale aufweist. Sie zeichnet sich durch eine Vorrichtung zum Bewirken einer definierten Drehwinkellage zwischen den zu verbindenden Werkzeugteilen aus, die ein elastisches Element umfasst. Dieses ist in einem ersten Bereich an einem ersten Werkzeugteil so eingespannt, dass ein zweiter Bereich des elastischen Elements beim Verbinden der Werkzeugteile in die Bewegungsbahn des zweiten Werkzeugteils ragt. Damit wird erreicht, dass beim Zusammenfügen der beiden Werkzeugteile dieser zweite Bereich von dem zweiten Werkzeugteil ausgelenkt und reversibel verformt wird. Diese Verformung führt zu einer Vorspannkraft des im ersten Bereich fest eingespannten elastischen Elements, die eine Relativdrehung der beiden Werkzeugteile bewirkt und damit eine definierte Drehwinkellage einstellt.

Bevorzugt wird ein Ausführungsbeispiel der Erfindung, das sich dadurch auszeichnet, dass das elastische Element als Torsionselement ausgebildet ist. Damit ist es möglich, die zur Erzwingung der Drehwinkellage erforderlichen Kräfte in einem weiten Bereich zu variieren.

Weitere Vorteile ergeben sich aus den übrigen Unteransprüchen.

Die Erfindung wird im Folgenden anhand der Zeichnung näher erläutert. Es zeigen:
- Figur 1: Eine Draufsicht auf ein erstes Werkzeugteil einer Verbindungsstelle;
- Figur 2: einen Längsschnitt des in Figur 1 dargestellten Werkzeugteils;
- Figur 3: eine Seitenansicht des in Figur 1 dargestellten Werkzeugteils;
- Figur 4: einen Längsschnitt entlang der Linie IV - IV durch das in Figur 2 dargestellte Werkzeug und
- Figur 5: eine schematische Darstellung einer Draufsicht auf ein erstes und zweites Werkzeugteil einer Verbindungsstelle.

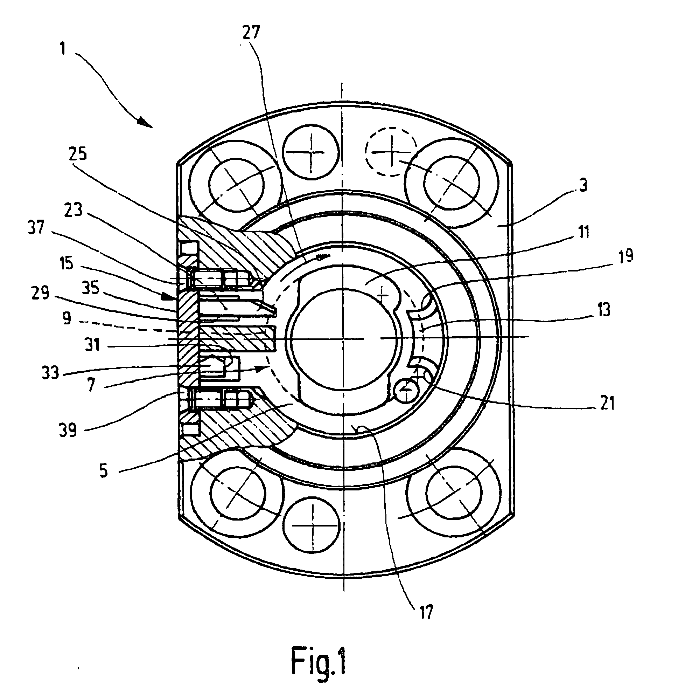

Die im Folgenden erläuterte Verbindungsstelle 1 umfasst zwei Werkzeugteile, von denen ein erstes in Draufsicht in Figur 1 wiedergegeben ist. Das erste Werkzeugteil 3 weist eine Ausnehmung 5 auf, in die ein zweites Werkzeugteil 7 einsteckbar ist, das hier durch eine gestrichelte Kreislinie 9 angedeutet ist. Zentral in der Ausnehmung 5 ist eine Spannpatrone 11 angeordnet, die der Befestigung des zweiten Werkzeugteils 7 am ersten Werkzeugteil 3 dient. Das zweite Werkzeugteil 7 weist einen Hohlschaft auf, der in die Ausnehmung 5 eingesteckt wird, so dass die Spannpatrone 11 im Inneren des Hohlschaftes angeordnet ist und diesen bei Herstellung der Verbindungsstelle 1, also beim Verspannen der beiden Werkzeugteile 3 und 7 in der Ausnehmung 5 festspannt, indem dieser radial aufgeweitet wird.

Der Hohlschaft des zweiten Werkzeugteils 7 weist zwei in Längsrichtung des Werkzeugteils 7 verlaufende Schlitze auf, in die einerseits ein Vorsprung 13 und andererseits eine Vorrichtung 15 zum Bewirken einer definierten Drehwinkellage eingreifen. Der Vorsprung 13 entspringt von der Innenfläche 17 der Ausnehmung 5 im ersten Werkzeugteil 3. Er ist so dimensioniert, dass er den im Hohlschaft des zweiten Werkzeugteils 7 vorgegebenen Schlitz praktisch vollständig ausfüllt. Damit können die Seitenflächen 19 und 21 des Vorsprungs 13 als Anlageflächen für die Flanken des Schlitzes im Hohlschaft des zweiten Werkzeugteils 7 dienen.

Gegenüber dem den Vorsprung 13 aufnehmenden ersten Schlitz im zweiten Werkzeugteil 7 ist ein zweiter Schlitz vorgesehen, in den ein elastisches Element 23 der Vorrichtung 15 eingreift. Das elastische Element 23 ist in einem ersten Bereich an dem ersten Werkzeugteil 3 fest eingespannt und ragt mit einem zweiten Bereich 25 in die Ausnehmung 5 so vor, dass dieser in der Bewegungsbahn des zweiten Werkzeugteils 7 liegt, wenn'es in die Ausnehmung 5 eingesteckt wird. Beim Zusammenfügen der Verbindungsstelle 1, also beim Einstecken des zweiten Werkzeugteils 7 in die Ausnehmung 5 des ersten Werkzeugteils 3, wird der zweite Bereich 25 des elastischen Elements 23 reversibel ausgelenkt, was eine Rückstellkraft bewirkt. Dadurch wird eine hier im Uhrzeigersinn wirkende Kraft aufgebaut, die auf den Hohlschaft des zweiten Werkzeugteils 7 wirkt, was durch einen Pfeil 27 angedeutet ist. Durch die von dem elastischen Element 23 ausgeübte Kraft wird der Hohlschaft des zweiten Werkzeugteils 7 im Uhrzeigersinn verdreht, bis dieser an der oberen Seitenfläche 19 des Vorsprungs 13 anschlägt und damit eine definierte Drehwinkellage zwischen den beiden Werkzeugteilen der Verbindungsstelle 1 gegeben ist. Nachdem diese durch die Vorrichtung 15 vorgegeben ist, wird die Spannpatrone 11 aktiviert, um das zweite Werkzeugteil 7 im ersten Werkzeugteil 3 fest einzuspannen.

Das elastische Element 23 ist in einer von außen in die Wandung des ersten Werkzeugteils 3 eingebrachten ersten Nut 29 untergebracht. Parallel zu dieser verläuft eine zweite Nut 31, in die ein Gegenstück 33 eingesetzt ist.

Durch eine Abdeckplatte 35, die von Schrauben 37 und 39 am ersten Werkzeugteil 3 befestigt ist, werden das elastische Element 23 und das Gegenstück 33 fest eingespannt.

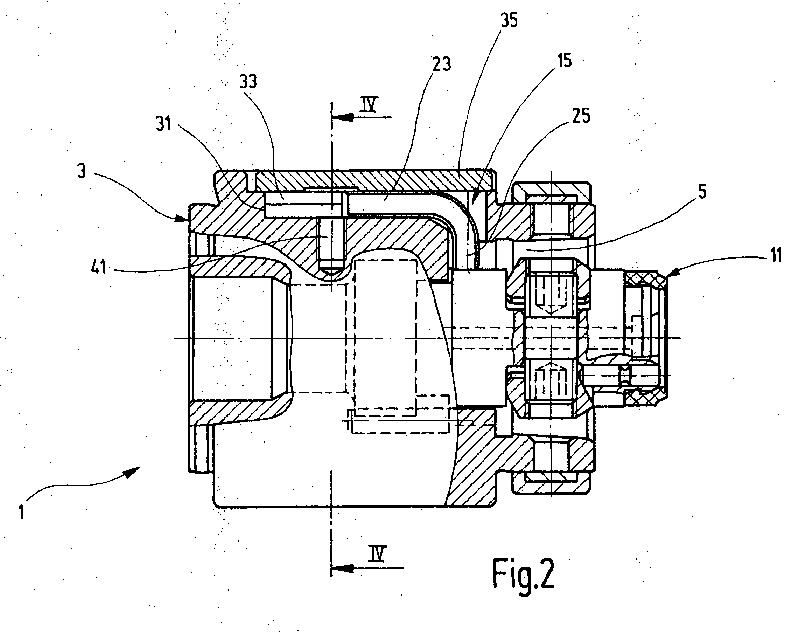

Figur 2 zeigt das erste Werkzeugteil 3 im Längsschnitt. Gleiche Teile, die anhand von Figur 1 erläutert wurden, sind mit gleichen Bezugsziffern versehen, so dass insoweit auf die Beschreibung zu Figur 1 verwiesen wird.

Der Längsschnitt ist so gelegt, dass das Gegenstück 33 in Seitenansicht erkennbar ist. Es liegt in der zweiten Nut 31. Hinter dem Gegenstück 33 ist das elastische Element 23 erkennbar, dessen erster Bereich, der durch das Gegenstück 33 verdeckt ist, in der ersten Nut 29 angeordnet ist. Der erste, verdeckte Bereich des elastischen Elements 23 ist, wie das Gegenstück 33 mit einer Außenkontur versehen, dessen Umfangfläche im Querschnitt von der Kreisform abweicht. Er ist hier mehreckig ausgebildet. Diese mehreckige Kontur soll sicherstellen, dass das elastische Element 23 im ersten Bereich verdrehsicher in der Wandung des ersten Werkzeugteils 3 gehalten wird. Die hier fünfeckige Kontur des Gegenstücks 33, die mit der des ersten Bereichs des elastischen Elements 23 übereinstimmt, ist aus der Darstellung gemäß Figur 1 ersichtlich. Sie ist so gewählt, dass der erste Bereich des elastischen Elements 23 und das Gegenstück 33 verdrehsicher im Grundkörper des ersten Werkzeugteils 3 gehalten werden. Figur 2 zeigt eine Spannschraube 41, die senkrecht zur Erstreckung des Gegenstücks 33 und des ersten Bereichs 43 des elastischen Elements 23 verläuft und in den Grundkörper des ersten Werkzeugteils 3 eingreift und dazu dient, den ersten Bereich des elastischen Elements 23 und das Gegenstück 33 drehfest im ersten Werkzeugteil 3 zu verspannen.

Die Darstellung gemäß Figur 2 lässt erkennen, dass der zweite Bereich 25 des elastischen Elements 23 in die Ausnehmung 5 des ersten Werkzeugteils 3 so hineinragt, dass es auch in den Bewegungspfad des zweiten Werkzeugteils 7 vorsteht, wenn dessen Hohlschaft in die Ausnehmung 5 eingesteckt wird.

Figur 2 lässt erkennen, dass das elastische Element 23 als Torsionselement ausgebildet ist und im wesentlichen eine L-förmige Ausgestaltung aufweist. Am Ende des längeren Schenkels des elastischen Elements 23 befindet sich der erste Bereich, der hinter dem Gegenstück 33 drehfest am ersten Werkzeugteil 3 festgespannt ist. Der kürzere Schenkel des elastischen Elements 23, also der zweite Bereich 25, ragt frei beweglich in die Ausnehmung 5, um gegebenenfalls mit dem Hohlschaft des zweiten Werkzeugteils 7 zusammenzuwirken.

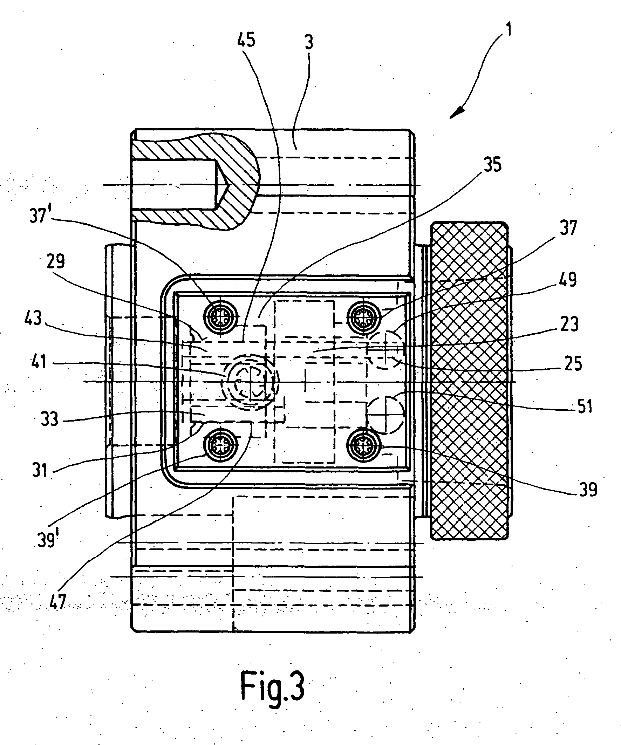

Figur 3 zeigt das erste Werkzeugteil 3 der Verbindungsstelle 1 in Seitenansicht. Deutlich ist hier die Abdeckplatte 35 zu sehen, die von den Schrauben 37 und 39, die in Figur 1 dargestellt sind, gehalten wird, außerdem von zwei weiteren Schrauben 37' und 39'. Gestrichelt ist in Figur 3 das elastische Element 23 angedeutet, das in der zugehörigen ersten Nut 29 untergebracht ist, außerdem das Gegenstück 33, das in der zweiten Nut 31 angeordnet ist. Es wird hier auch deutlich, dass das Gegenstück kürzer ist als das elastische Element 23 und sich nur über einen Bereich erstreckt, der auch von der Spannschraube 41 erfasst wird. Diese drängt den ersten Bereich 43 des elastischen Elements 23 gegen die obere Flanke 45 der ersten Nut 29 und gleichzeitig das Gegenstück 33 gegen die untere Flanke 47 der ersten Nut 31. Da das Gegenstück 33 und insbesondere der erste Bereich 43 des elastischen Elements 23 eine von der Kreisbogenform abweichende Querschnittsfläche aufweist, wird beim Festschrauben der Spannschraube 41 eine drehsichere Verankerung des elastischen Elements 23 im Grundkörper des ersten Werkzeugteils 3 sichergestellt.

In Figur 3 ist erkennbar, dass in die Wandung des ersten Werkzeugteils 3 eine erste Ausnehmung 49 eingebracht ist, die die erste Nut 29 schneidet. Es ist außerdem eine zweite Ausnehmung 51 vorgesehen, die die erste Nut 31 schneidet. Durch die erste Ausnehmung 49 ragt der zweite Bereich 25 des elastischen Elements 23 durch die Wandung des ersten Werkzeugteils 3 in dessen Ausnehmung 5 und in den Bewegungspfad des in die Ausnehmung 5 eingesteckten zweiten Werkzeugteils 7, das hier nicht dargestellt ist.

Die zweite Ausnehmung 51 dient dazu, dass elastische Element 23 gegebenenfalls zu versetzen und aus der ersten Nut 29 in die zweite Nut 31 zu versetzen, wobei auch das Gegenstück 33 entsprechend in die gegenüberliegende Nut verlagert wird. Es ist damit möglich, mittels des elastischen Elements 23 auf einfache Weise eine definierte Drehwinkellage zu gewährleisten, unabhängig davon, ob der Hohlschaft des zweiten. Werkzeugteils 7 an die obere Seitenfläche 19 oder die untere Seitenfläche 21 des Vorsprungs 13 anschlagen soll. Die Vorrichtung 15 zum Bewirken einer definierten Drehwinkellage kann also universell für einen Rechts- und/oder Linksanschlag verwendet werden.

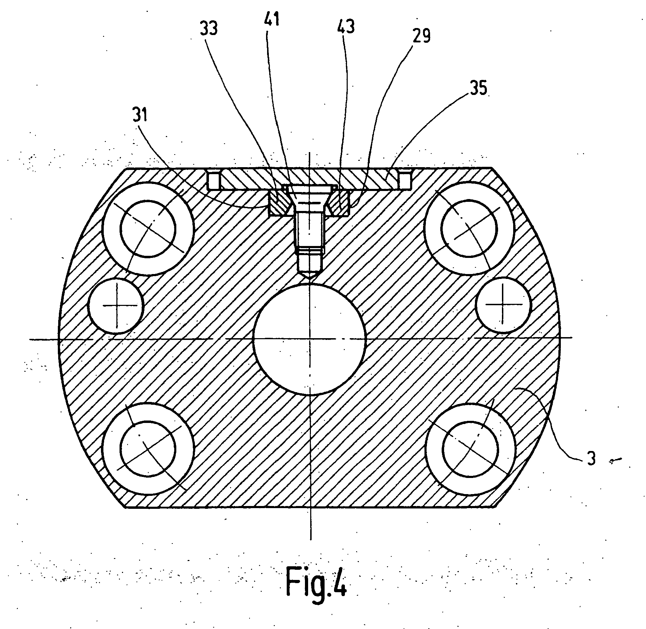

Figur 4 zeigt einen Schnitt entlang der in Figur 2 eingezeichneten Linie IV-IV. Deutlich erkennbar ist hier die am ersten Werkzeugteil 3 verankerte Abdeckplatte 35, die die erste Nut 29 und die zweite Nut 31 abschließt und damit den ersten Bereich 43 des elastischen Elements und das Gegenstück 33 verdrehsicher hält. Zusätzlich ist hier die Spannschraube 41 erkennbar, die dafür sorgt, dass der erste Bereich 43 sicher gehalten und gegen Verdrehen abgestützt ist. Durch die spezielle Kontur des ersten Bereichs 43 und die des Gegenstücks 33, die hier sich von oben nach unten V-förmig erstreckende Anlaufschrägen aufweisen, drängt der sich konisch nach unten verjüngende Kopf der Spannschraube 41 den ersten Bereich 43 und das Gegenstück 33 so auseinander, dass eine Verdrehung des elastischen Elements 23 sicher vermieden wird.

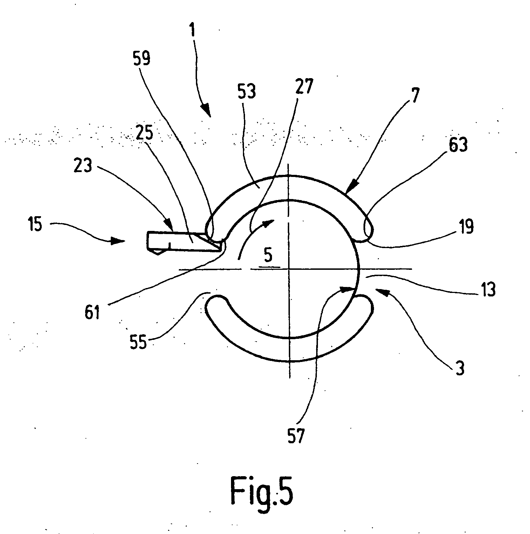

Figur 5 verdeutlicht noch einmal die Funktionsweise der Vorrichtung 15 innerhalb der Verbindungsstelle 1, die hier nur zum Teil schematisch wiedergegeben ist. Figur 5 zeigt die Verbindungsstelle 1 in Draufsicht, wie dies auch in Figur 1 der Fall ist. Deutlich ist der zweite Bereich 25 des elastischen Elements 23 erkennbar, der in die Ausnehmung 5 des hier nur angedeuteten ersten Werkzeugteils 3 und in die Bewegungsbahn des zweiten Werkzeugteils 7 ragt, von dem hier der Hohlschaft 53 angedeutet ist. Es ist hier erkennbar, dass der Hohlschaft 53 zwei in dessen Längsrichtung verlaufende Schlitze 55 und 57 aufweist. In den ersten Schlitz 55 ragt der zweite Bereich 25 des elastischen Elements 23, in den zweiten Schlitz 57 springt der Vorsprung 13 vor, der anhand von Figur 1 erläutert wurde. Der zweite Bereich 25 des elastischen Elements weist hier eine Anlaufschräge 59 auf, die mit einer Seitenfläche 61 des ersten Schlitzes 55 so zusammenwirkt, dass auf den Hohlschaft 53 eine in Richtung des Pfeils 27 gerichtete Kraft wirkt. Diese führt dazu, dass die Seitenfläche 63 des zweiten Schlitzes 57 an der Seitenfläche 19 des Vorsprungs 13 anliegt und damit eine definierte Drehwinkellage zwischen dem Hohlschaft 53 des zweiten Werkzeugteils 7 und dem Vorsprung 13 des ersten Werkzeugteils 3 gegeben ist. Bei einer universellen Verwendung des elastischen Elements 23 für Rechts- und Linksanschlag des Hohlschafts 53 am Vorsprung 13 kann der zweite Bereich 25 an seinem freien Ende mit symmetrischen Anlaufschrägen versehen werden. Es ist überdies möglichein spiegelbildlich ausgebildetes Element 23 vorzusehen, wenn eine entgegengesetzt zum Pfeil 27 gerichtete Verspannkraft aufgebracht werden soll.

Nachdem mit Hilfe der Vorrichtung 15 die beiden Werkzeugteile eine definierte Drehwinkellage eingenommen haben, kann nun im Bereich der Verbindungsstelle 1 eine Verspannung der beiden Werkzeugteile vorgenommen werden, in dem die Spannpatrone 11 auf übliche Weise aktiviert wird und den Hohlschaft 53 des zweiten Werkzeugteils 7 so ausdehnt, dass dieser sicher an der Innenfläche der Ausnehmung 5 anliegt.

Im Betrieb der Verbindungsstelle 1 können über den Vorsprung 13 hohe Drehmomente vom ersten Werkzeugteil 3 auf das zweite Werkzeugteil 7 oder umgekehrt übertragen werden. Bei einer Drehbewegung des Werkzeugs im Bereich der Verbindungsstelle 1 gegen den Uhrzeigersinn ist sichergestellt, dass auch unter Belastung keine Relativdrehung zwischen dem ersten Werkzeugteil 3 und dem zweiten Werkzeugteil 7 gegeben ist, weil durch die Vorrichtung 15 eine Anlage der Seitenfläche 63 des Hohlschafts 53 an der Seitenfläche 19 des Vorsprungs 13 gewährleistet ist.

Aus der Funktionsweise der Vorrichtung 15 ist ersichtlich, dass grundsätzlich ein kurzer in die Seitenwand des ersten Werkzeugteils 3 eingesetzter Stift als elastisches Element 23 Verwendung finden kann, um eine definierte Drehwinkellage der Werkzeugstücke vorzugeben. Wird jedoch das elastische Element 23, wie hier erläutert, L-förmig und damit als Torsionselement ausgebildet, ergibt sich ein längerer Verformungsweg innerhalb des elastischen Elements 23, so dass ein Ermüdungsbruch praktisch ausgeschlossen werden kann. Außerdem können durch die Wahl der Länge und/oder des Durchmessers des in Längsrichtung der Verbindungsstelle 1 verlaufenden Schenkels des elastischen Elements 23, oder durch Wahl des Materials der vorzugsweise aus Metall hergestellten Elements 23 die Vorspannkräfte variiert werden, die bei der Erzwingung der Drehwinkellage aufgebaut werden sollen. Wesentlich ist also, dass das elastische Element 23 beim Zusammenfügen der der Verbindungsstelle 1 zugeordneten Werkzeugteile 3, 7 ausgelenkt und reversibel verformt wird. Durch die Rückstellkräfte des elastischen Elements 23 findet eine Relativdrehung, zwischen den Werkzeugteilen 3, 7 statt, so dass eine definierte Drehwinkellage gewährleistet ist.

Nach allem zeigt sich auch, dass über den Umfang des ersten Werkzeugteils 3 mehrere elastische Elemente 23 verteilt werden können, um die Einstellkräfte zu erhöhen. Schließlich ist es auch denkbar, mindestens ein elastisches Element zusätzlich oder statt der hier beschriebenen am zweiten Werkzeugteil 7 vorzusehen. Im übrigen kann das elastische Element auch an der stirnseitigen Berührungsfläche zweier Werkzeugteile angeordnet sein, oder hier mit einem oder beiden Werkzeugteile in Eingriff treffen, um eine definierte Drehwinkellage zu erreichen.

## Patentansprüche

1. Werkzeug mit zwei Werkzeugteilen, die im Bereich einer Verbindungsstelle miteinander verbunden sind und eine Vorrichtung mit einem elastischen Element umfassen, die eine definierte Drehwinkellage zwischen den Werkzeugteilen bewirkt, **dadurch gekennzeichnet, dass** das elastische Element (23) in einem ersten Bereich (43) an dem ersten Werkzeugteil (3) so eingespannt ist, dass ein zweiter Bereich (25) des elastischen Elements (23) beim Verbinden der Werkzeugteile (3,7) in die Bewegungsbahn des zweiten Werkzeugteils (7) ragt, so dass er von diesem ausgelenkt und reversibel verformt wird.

2. Werkzeug nach Anspruch 1, **dadurch gekennzeichnet, dass** das elastische Element (23) als Torsionselement ausgebildet ist.

3. Werkzeug nach Anspruch 1 oder 2, **dadurch gekennzeichnet, dass** das elastische Element (23) L-förmig ausgebildet ist und einen in den Verbindungsbereich zwischen dem ersten und zweiten Werkzeugteil (3,7) ragenden Vorsprung (25) aufweist.

4. Werkzeug nach einem der vorhergehenden Ansprüche, **dadurch gekennzeichnet, dass** das elastische Element (23) in dem am ersten Werkzeugteil (3) festgespannten ersten Bereich (43) mindestens einen Abschnitt aufweist, dessen Umfangsfläche im Querschnitt von der Kreisform abweicht.

5. Werkzeug nach einem der vorhergehenden Ansprüche, **dadurch gekennzeichnet, dass** das elastische Element (23) im ersten Bereich (43) einen im Querschnitt mehreckigen Abschnitt aufweist.

6. Werkzeug nach einem der vorhergehenden Ansprüche, **dadurch gekennzeichnet, dass** das erste Werkzeugteil (3) einen Teil des zweiten Werkzeugteils (7) aufnehmenden Ausnehmung (5) aufweist.

7. Werkzeug nach einem der vorhergehenden Ansprüche, **dadurch gekennzeichnet, dass** das elastische Element (23) in die Wandung des ersten Werkzeugteils (3) einsetzbar ist.

8. Werkzeug nach einem der Ansprüche 6-7, **dadurch gekennzeichnet, dass** der Vorsprung des elastischen Elements (23) in der Wandung des ersten Werkzeugteils (3) angeordnet ist und in das Innere der Ausnehmung (5) ragt.

9. Werkzeug nach einem der vorhergehenden Ansprüche **dadurch gekennzeichnet, dass** in die Wandung des ersten Werkzeugteils (3) zwei Nuten (29,31) zur Aufnahme eines elastischen Elements (23) angeordnet sind.

10. Werkzeug nach Anspruch 9, **dadurch gekennzeichnet, dass** zumindest die erste Nut (29) eine die Wandung des ersten Werkzeugteils (3) durchdringende Ausnehmung (49) schneidet.

11. Werkzeug nach einem der vorhergehenden Ansprüche, **dadurch gekennzeichnet, dass** in die Wandung des ersten Werkzeugteils (3) ein dem elastischen Element (23) zugeordneten Gegenstück (33) einsetzbar ist.

## Claims

1. Tool with two tool parts which are joined together in the region of a connecting point and comprise a device with a resilient element, which device brings about a defined rotational angle position between the tool parts, **characterized in that** the resilient element (23) is clamped in a first region (43) to the first tool part (3) in such a way that a second region (25) of the resilient element (23) projects during the connecting of the tool parts (3, 7) into the path of movement of the second tool part (7), so that it is deflected by said second tool part and reversibly deformed.

2. Tool according to claim 1, **characterized in that** the resilient element (23) is configured as a torsion element.

3. Tool according to claim 1 or 2, **characterized in that** the resilient element (23) is L-shaped in its configuration and has a projection (25) projecting into the region of connection between the first and second tool part (3, 7).

4. Tool according to one of the preceding claims, **characterized in that** the resilient element (23) has in the first region (43) secured to the first tool part (3) at least one portion, the circumferential surface of which is non-circular in cross section.

5. Tool according to one of the preceding claims, **characterized in that** the resilient element (23) has in the first region (43) a portion which is polygonal in cross section.

6. Tool according to one of the preceding claims, **characterized in that** the first tool part (3) has a recess (5) receiving a part of the second tool part (7).

7. Tool according to one of the preceding claims, **characterized in that** the resilient element (23) can be inserted into the wall of the first tool part (3).

8. Tool according to one of claims 6 to 7, **characterized in that** the projection of the resilient element (23) is arranged in the wall of the first tool part (3) and projects into the interior of the recess (5).

9. Tool according to one of the preceding claims, **characterized in that** two grooves (29, 31) are arranged in the wall of the first tool part (3) for receiving a resilient element (23).

10. Tool according to claim 9, **characterized in that** at least the first groove (29) intersects a recess (49) penetrating the wall of the first tool part (3).

11. Tool according to one of the preceding claims, **characterized in that** a counterpiece (33) associated with the resilient element (23) can be inserted into the wall of the first tool part (3).

## Revendications

1. Outil comprenant deux parties d'outil qui sont reliées entre elles dans la zone d'un point d'assemblage et comportent un dispositif avec un élément élastique qui provoque une position d'angle de rotation définie entre les parties d'outil, **caractérisé en ce que** l'élément élastique (23) est serré dans une première zone (43) sur la première partie d'outil (3) de telle manière qu'une deuxième zone (25) de l'élément élastique (23) entre, lors de l'assemblage des parties d'outil (3, 7), dans la trajectoire de la deuxième partie d'outil (7) de telle sorte qu'elle est déviée par celle-ci et déformée de manière réversible.

2. Outil selon la revendication 1, **caractérisé en ce que** l'élément élastique (23) est réalisé sous la forme d'un élément de torsion.

3. Outil selon la revendication 1 ou 2, **caractérisé en ce que** l'élément élastique (23) est réalisé en forme de L et présente une saillie (25) entrant dans la zone d'assemblage entre la première et la deuxième partie d'outil (3, 7).

4. Outil selon l'une quelconque des revendications précédentes, **caractérisé en ce que** l'élément élastique (23) présente, dans la première zone (43) fixée sur la première partie d'outil (3), au moins un segment dont la surface circonférentielle diffère, dans sa section transversale, de la forme circulaire.

5. Outil selon l'une quelconque des revendications précédentes, **caractérisé en ce que** l'élément élastique (23) présente, dans la première zone (43), un segment de section transversale polygonale.

6. Outil selon l'une quelconque des revendications précédentes, **caractérisé en ce que** la première partie d'outil (3) présente un évidement (5) recevant une partie de la deuxième partie d'outil (7).

7. Outil selon l'une quelconque des revendications précédentes, **caractérisé en ce que** l'élément élastique (23) peut être inséré dans la paroi de la première partie d'outil (3).

8. Outil selon l'une quelconque des revendications 6 à 7, **caractérisé en ce que** la saillie de l'élément élastique (23) est disposée dans la paroi de la première partie d'outil (3) et entre à l'intérieur de l'évidement (5).

9. Outil selon l'une quelconque des revendications précédentes, **caractérisé en ce que** deux rainures (29, 31) sont disposées dans la paroi de la première partie d'outil (3) pour recevoir un élément élastique (23).

10. Outil selon la revendication 9, **caractérisé en ce qu'**au moins la première rainure (29) coupe un évidement (49) pénétrant la paroi de la première partie d'outil (3).

11. Outil selon l'une quelconque des revendications précédentes, **caractérisé en ce qu'**une pièce opposée (33), associée à l'élément élastique (23), peut être insérée dans la paroi de la première partie d'outil (3).
